# EUROPEAN PATENT APPLICATION

(11) **EP 1 179 790 A1**
(43) Date of publication of application: **13.02.2002**
(21) Application number: 00650098.7
(22) Date of filing: 08.08.2000
(51) Int. Cl.: G06F 17/50

(54) **Electronic circuit design**

(71) Applicant: Stratus Research and Development Limited, Blanchardstown, Dublin 15 (IE)
(72) Inventor: Twomey, Padraig, Blanchardstown, Dublin 15 (IE); McLoughlin, Michael, Glasnevin, Dublin 9 (IE); Murphy, Timothy, Phibsboro, Dublin 7 (IE); Clancy, Liam, Dunboyne, Co. Meath (IE)
(74) Representative: Weldon, Michael James

(57) **Abstract**

An electronic circuit is designed to be ready for manufacture in a method (1) which involves generation of a HDL netlist (2) to which padstacks and gates are added (4). There is then design optimisation (5) using signal integrity simulation and timing analysis tools which is for modification circuit layout. The design is then routed (6) and there is final optimisation (7) with signal integrity simulation and timing analysis.

## Description

### Field of the Invention

The invention relates to design of electronic circuits.

### Prior Art Discussion

Heretofore, such design has involved considerable time input by engineers and there is much "trial-and-error" testing and modification. Some improvements have been made by provision of tools for specific tasks. For example, PCT Patent Specification No. WO99/08213 (Cadence) describes use of stage-based constraints for timing-driven design of integrated circuits. There is a set of partitions each containing a source and a target with an associated path. All of the sources within a partition are triggered by a common clock edge. United States Patent Specification No. 5535146 (National Science Council) describes logic simulation in which there is a circuit model for a user-specified design of a multi-peak resonant tunnelling diode-based electronic circuit.

### Object of the Invention

Such methods and systems provide for improved performance in specific aspects of electronic design. However, there is a need for an improved overall method and system which reduces design lead time and provides improved quality.

### SUMMARY OF THE INVENTION

According to the invention, there is provided a method for generating production data for production of a hardware circuit, the method comprising the steps of generating a text format netlist and transforming the netlist to provide the design, characterised in that the netlist is transformed by:-
(a) generating a HDL code circuit netlist;
(b) generating a circuit layout from the HDL code circuit netlist;
(c) performing signal integrity simulation and timing analysis on the circuit layout and modifying the layout in iterative steps; and
(d) applying routing tracks to the layout; and
(e) performing final signal integrity simulation and timing analysis of the routed layout, feeding back re-routed nets, and optimising the layout to provide design fabrication data.

In one embodiment, the signal integrity simulation sub-step of step (c) comprises feeding back critical net data for repeated layout modification.

Preferably, said feedback is activated by timing analysis responses and preferably the timing analysis responses are in Standard Delay Format.

In another embodiment, the step (a) comprises iterative functional behaviour simulation and corresponding HDL code modification.

Preferably, said iterative steps are performed until a functionally satisfactory model is obtained, and the resultant HDL netlist is subjected to a timing analysis.

Preferably, the timing analysis provides a netlist with timing data, and said netlist and data are tested for signal integrity with signal ramping simulation. In one embodiment, said testing step feeds back data for modifications of the HDL netlist.

In another embodiment, the resultant HDL model is processed by a tool before step (c), said tool adding padstacks and logic gates. Preferably, said tool generates a Bill of Materials for production of the circuit.

In a further embodiment, the method comprises the steps of retrieving timing models for timing analysis.

In one embodiment, the method comprises the steps of retrieving input/output buffer integrity specification models for signal integrity testing.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a flow diagram illustrating a method for generating a mask for production of a hardware circuit;
Fig. 2 is a diagram showing netlist generation steps of the method in more detail;
Fig. 3 is a flow diagram illustrating design optimisation steps in more detail; and

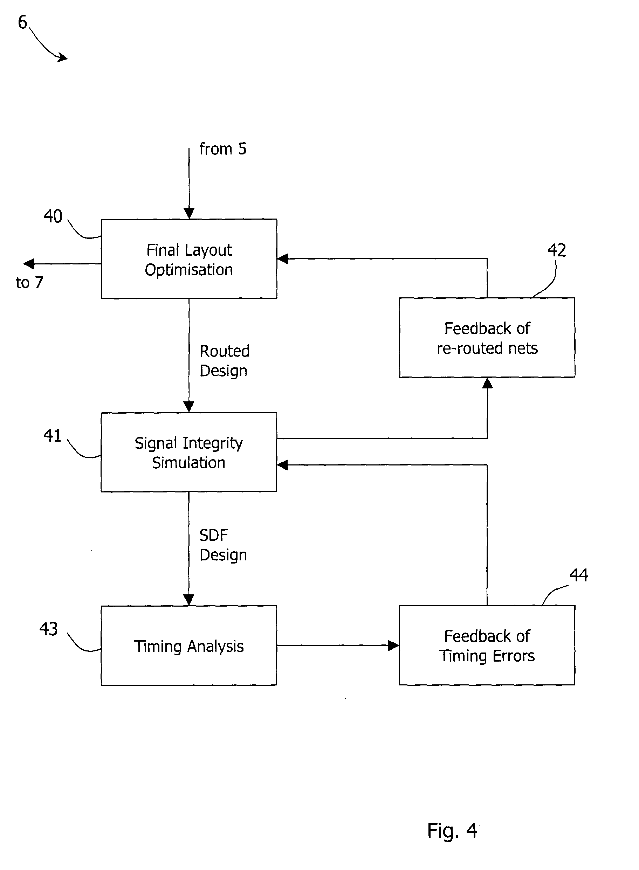

Fig. 4 is a flow diagram illustrating final optimisation steps of the method in more detail.

### Description of the Embodiments

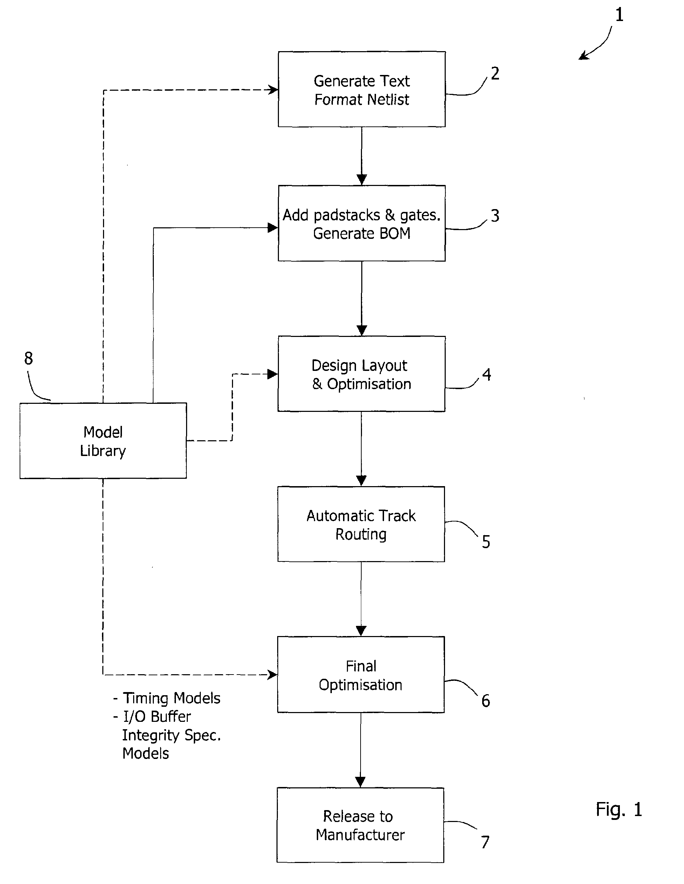

Referring initially to Fig. 1, there is shown an overall method 1 for generating production data for manufacture of a circuit. The circuit components are not necessarily integrated and are typically mounted on a printed circuit board with surface mount assembly.

The method is indicated generally by the numeral 1, and in step 2 a text-format netlist is generated, in this embodiment in Verilog™ hardware definition language (HDL) code providing a circuit definition model.

The HDL model is outputted to a tool which performs a step 3 of adding padstacks and gates. Also, generic circuit elements which are required for the type of circuit are added and a database of electronic components and mechanical fixings is used to generate a bill of materials (BOM).

In step 4, a circuit layout is generated and is optimised by signal integrity testing and timing analysis. This provides an output to which track routing is automatically applied in step 5. There is then, in turn, final optimisation in a step 6. The latter step also involves signal integrity testing and timing analysis to provide a final release in step 7 which is required for production. This includes a Gerber data mask for fabrication, and also circuit design layout data to enable placement of the electronic components for soldering.

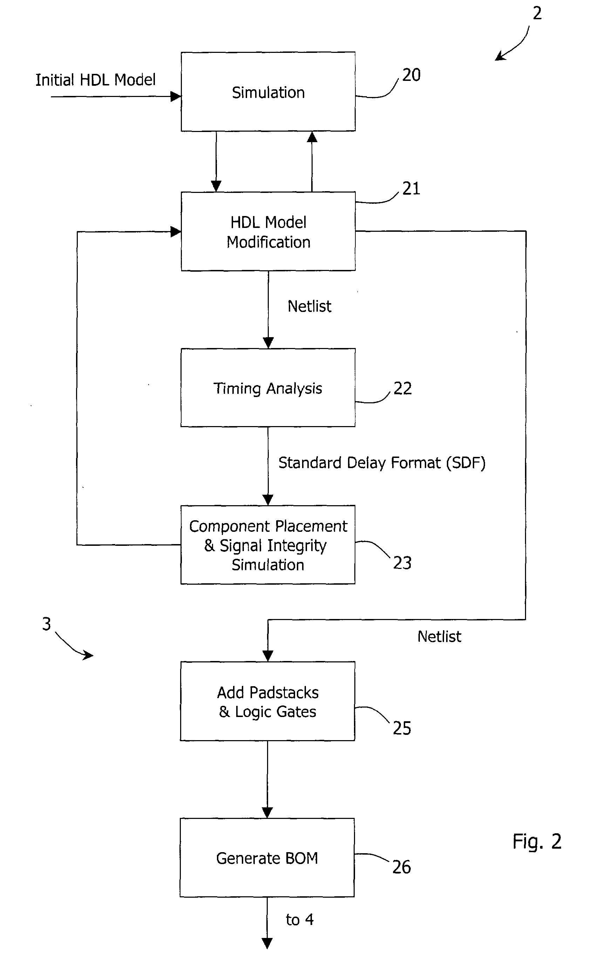

Referring now to Fig. 2, steps 2 and 4 are now described in more detail. In step 20 a functional behaviour simulation tool based on a product marketed under the name Cadence XL™ is used to simulate functional behaviour of a model in Verilog™ HDL. The following is an example from HDL code, which describes a series resistor RS9825 between nets addr_c[0] and addr_c_st0[0]. The codes "//!" indicate that what follows are comments.

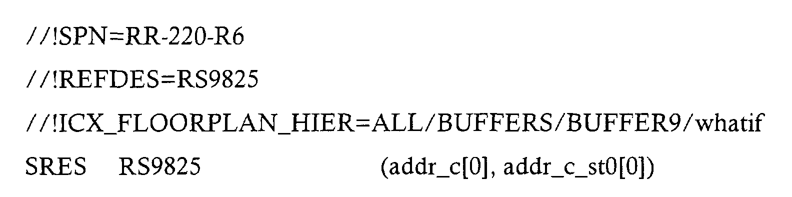

The tool begins with an initial HDL model, and thence uses modified models fed back by the step 21 in iterative fashion.

The simulation tool outputs are analysed and required changes are determined. These are implemented in HDL in step 21 and the modified models are fed back to the simulation tool to repeat the step 20 until a desired functional behaviour is obtained.

In step 22, there is a timing analysis performed on the outputted HDL netlist. This is a timing analysis which flags violations of timing. The timing analysis tool interfaces directly with a simulation tool which provides a step 23 of component placement and signal integrity simulation. This interfacing is very important as it expedites the design cycle while achieving excellent quality. This tool allows interactive input by a designer to place components and it uses the input from the timing analysis to drive the placement so that components are only placed where they are most effective. Step 23 allows signal integrity problems to be dealt with at an early stage in the lifecycle. The resultant changes are fed back for further modification of the model in step 21 until the model is optimised, in which case a HDL code netlist is released to a tool which performs a step 25.

The exporting step between steps 23 and 21 for feedback is a text file report output which is interpreted by a script which extracts references to resistors, opens the HDL circuit definition, and implements the changes. The resistors are automatically added in HDL before release to the step 25.

In step 25, the padstacks and logic gates are added. These are used to generate the BOM in step 26. The logic gates are particularly for generic functions.

Steps 2 and 3 are important as they ensure that there is signal integrity and proper timing relationships between components, that all required components have been added, and that the components have been added at the correct locations. Heretofore, many of these steps have been performed close to the end of the life cycle and this can cause design problems at a late stage.

Another important aspect of these steps is that a model library 8 is used. This provides timing models for the step 22 and I/O buffer integrity specification models for the step 23. These models are drawn from a database as required. Models are also used by the design optimisation step 4 and by the final optimisation step 6.

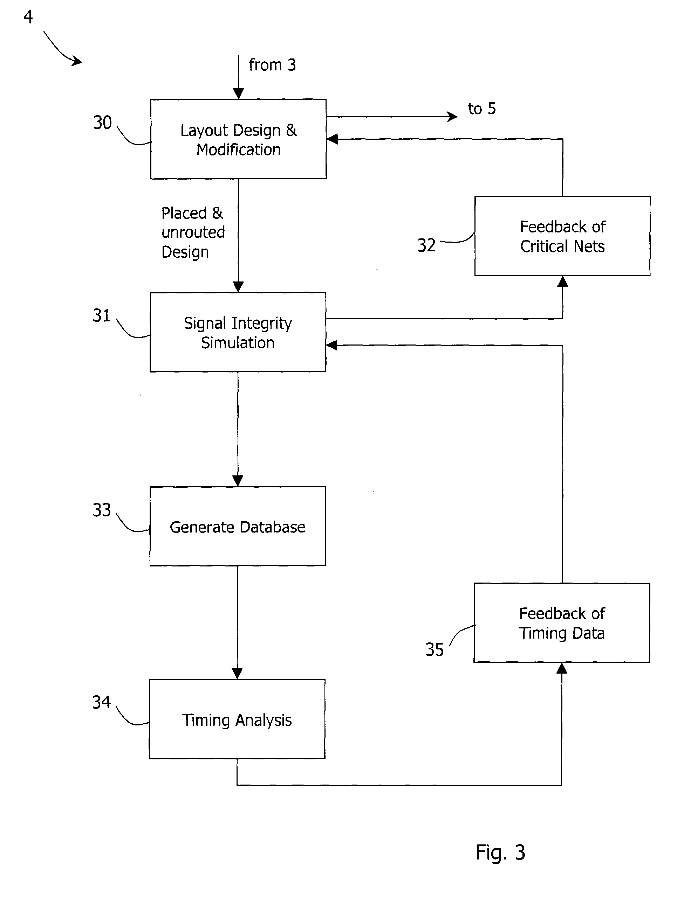

In step 4, the design is optimised in a sequence of steps 30 to 35, shown in Fig. 3. Step 30 involves layout design and modification using a tool based on a product called Allegro™. This is a board layout tool which takes an input from design functions to produce a layout which can be manufactured. This step generates a placed and unrouted layout which is tested for signal integrity simulation in step 31. The signal integrity simulation provides a feedback of critical nets in step 32.

In addition, however, step 31 also outputs instructions for generation of a database in step 33. The database comprises netlist and timing models and ASIC tools. Timing models are generated from vendor data, using a library generation tool. For ASICs (Application Specific Integrated Circuits), FPGAs (Field Programmable Gate Arrays) or CPLDs (Complex Programmable Logic Devices) outputs from ASIC, FPGA or CPLD timing analysis tools ("fitters") are used to generate board level models.

Data is drawn from the database for performance of a timing analysis in step 34 and this outputs timing data in Standard Delay Format (SDF) for provision of feedback in step 35 for the signal integrity simulation step 31. It is this feedback which also contributes to provision of the feedback 32 for layout design and modification. The following is a sample from an SDF file. In this sample the file indicates that the delay from device F508 pin Cath to device TF-208 pin out is 0.5014nS min and 0.507nS max.

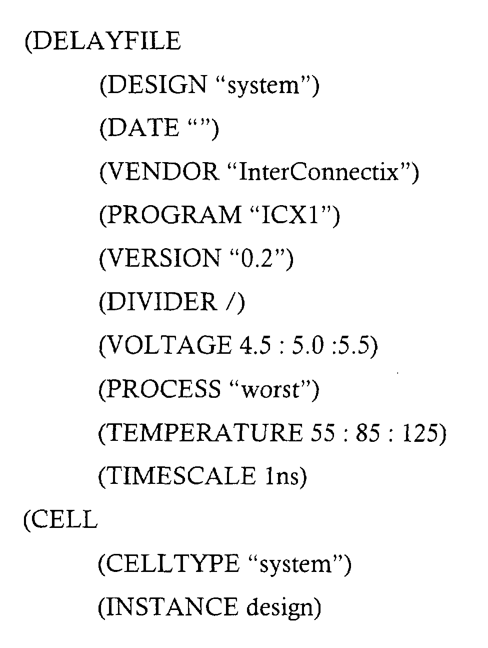

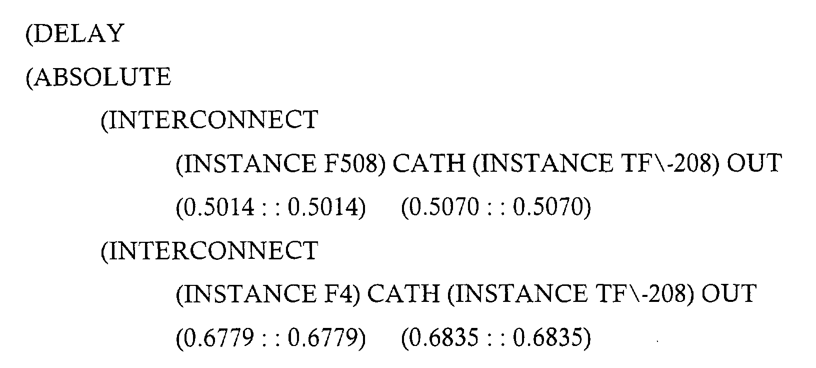

Step 4 thus generates a layout by transforming a HDL code circuit definition to an actual circuit. The layout accounts for electrical characteristics, drilling of vias, and other SMT requirements. In step 4, the signal integrity simulation 31 is important for generating of critical nets. Critical nets are routed in a signal integrity optimisation tool and back-annotated to the layout design and modification tool of step 30.

In step 5 there is automatic track routing using an auto router, in which non-critical nets are routed using topology rules. The output is reviewed by a design engineer.

In step 5, the routed layout is then tested in a manner analogous to the step 4. In this case, however, there is little iteration as the output of step 5 is processed to optimise the layout in step 40 and the routed and optimised design is tested for signal integrity in step 41. Again, there is a timing analysis step 43 which provides timing error feedback in step 44. This in turn activates feedback of re-routed nets in step 42 for final layout optimisation. Within step 6, the signal integrity simulation is performed with knowledge of the exact conductor lengths and dielectric properties and so it can determine the transmission line delay. Also, within step 4 the timing analysis adds to the design and determines timing errors. The final output is provided as Gerber data (industry standard electronic-format drawing) from the step 40.

It has been found that the step 2 is very important as it deals with timing and signal integrity issues for optimum location of components at an early design stage. An important part of step 2 is the interfacing of the timing analysis and signal integrity simulation tools using Standard Delay Format (SDF) files.

It has also been found that the combination of design optimisation followed by track routing, and in turn followed by final optimisation helps to reduce the lifecycle and provide improved quality. The process defers layout design until a late stage so that there is much less scope for layout-originating errors to arise. The circuit design requirements and inputs are used to a much greater extent than layout design for routing of critical nets.

The invention is not limited to the embodiments described, but may be varied in construction and detail within the scope of the claims.

## Claims

1. A method for generating production data for production of a hardware circuit, the method comprising the steps of generating a text format netlist and transforming the netlist to provide the design, **characterised in that** the netlist is transformed by:-
(a) generating (2) a HDL code circuit netlist;
(b) generating a circuit layout (30) from the HDL code circuit netlist;
(c) performing signal integrity simulation (31) and timing analysis (34) on the circuit layout and modifying the layout (30) in iterative steps;
(d) applying (5) routing tracks to the layout; and
(e) performing final signal integrity simulation (41) and timing analysis (43) of the routed layout, feeding back re-routed nets, and optimising (40) the layout to provide design fabrication data.

2. A method as claimed in claim 1, wherein the signal integrity simulation sub-step (31) of step (c) comprises feeding back (32) critical net data for repeated layout modification.

3. A method as claimed in claim 2, wherein said feedback (32) is activated by timing analysis (34, 35) responses.

4. A method as claimed in claim 3, wherein the timing analysis responses (35) are in Standard Delay Format.

5. A method as claimed in any preceding claim, wherein the step (a) comprises iterative functional behaviour simulation (20) and corresponding HDL code modification (21).

6. A method as claimed in claim 5, wherein said iterative steps are performed until a functionally satisfactory model is obtained, and the resultant HDL netlist is subjected to a timing analysis (22).

7. A method as claimed in claim 6, wherein the timing analysis provides a netlist with timing data, and said netlist and data are tested for signal integrity with signal ramping simulation (23).

8. A method as claimed in claim 7, wherein said testing step (23) feeds back data for modification (21) of the HDL model.

9. A method as claimed in claim 8, wherein the resultant HDL model is processed by a tool before step (c), said tool adding padstacks and logic gates (3).

10. A method as claimed in claim 9, wherein said tool generates a Bill of Materials for production of the circuit.

11. A method as claimed in any preceding claim, wherein the method comprises the steps of retrieving timing models (8) for timing analysis.

12. A method as claimed in any preceding claim, wherein the method comprises the steps of retrieving input/output buffer integrity specification models (8) for signal integrity testing.
